# EUROPÄISCHE PATENTSCHRIFT

(11) **EP 3 259 223 B1**
(45) Veröffentlichungstag und Bekanntmachung des Hinweises auf die Patenterteilung: **01.12.2021**
(21) Anmeldenummer: 16702038.7
(22) Anmeldetag: 14.01.2016
(51) Int. Cl.: B66C 21/00, B66B 9/06, E21F 13/04, E21F 13/06, B66B 19/00

(54) **FÖRDERANLAGE FÜR DEN OFFENEN TAGEBAU**
CONVEYING SYSTEM FOR OPEN-CAST MINING
SYSTÈME DE TRANSPORT POUR L'EXPLOITATION DE MINE À CIEL OUVERT

(30) Priorität: 16.02.2015 DE 102015001825
(43) Veröffentlichungstag der Anmeldung: 27.12.2017
(73) Patentinhaber: thyssenkrupp Industrial Solutions AG, 45143 Essen (DE); thyssenkrupp AG, 45143 Essen (DE)
(72) Erfinder: WOLPERS, Franz, 66459 Kirkel (DE); SPANKE, Matthias, 66121 Saarbrücken (DE); DONNER, Benjamin, 66123 Saarbrücken (DE); YE, Wei, 66117 Saarbrücken (DE)
(74) Vertreter: thyssenkrupp Intellectual Property GmbH
(86) Internationale Anmeldenummer: PCT/EP2016/050607
(87) Internationale Veröffentlichungsnummer: WO 2016/131566

(56) Entgegenhaltungen:
- DE-A1- 2 948 035
- DE-A1-102012 100 765
- FR-A- 529 097
- SU-A1- 420 546

## Beschreibung

Die vorliegende Erfindung betrifft eine Förderanlage für den offenen Tagebau, ausgebildet zur Anordnung über einer schrägen Böschung eines Tagebautrichters, mit der Rohstoffe von einem unteren Höhenniveau auf einer Abbausohle des Tagebaus auf ein oberes Höhenniveau auf einem Erdboden angrenzend an den Tagebautrichter förderbar sind, wobei wenigstens ein Fördergefäß vorgesehen ist, das mit Rohstoffen auf dem unteren Höhenniveau beladbar ist und aus dem die Rohstoffe auf dem oberen Höhenniveau entladbar sind, und wobei auf dem unteren Höhenniveau eine LKW-Aufgabestation eingerichtet ist und an die das Fördergefäß führbar ist, sodass die Rohstoffe von einem auf die LKW-Aufgabestation fahrbaren Lastkraftwagen über einen Schüttvorgang in das Fördergefäß einfüllbar sind.

### STAND DER TECHNIK

Die DE 10 2012 100 765 A1 offenbart eine Steilförderanlage gemäß dem Oberbegriff des Anspruchs 1, zur Anordnung an einer Böschung eines Tagebau-Abbautrichters, mit der Rohstoffe von einem unteren Höhenniveau, insbesondere aus einer Abbausohle des Tagebaus auf ein oberes Höhenniveau, insbesondere gebildet durch einen Erdboden, transportierbar sind, aufweisend eine an der Böschung angeordnete Trasse. Auf der Trasse sind ein erster Förderkorb und ein zweiter Förderkorb gegeneinander beweglich verfahrbar, und die Förderkörbe auf der Trasse sind über ein gemeinsames Zugmittel miteinander verbunden. Die Trasse weist eine Stahlkonstruktion in Fachwerkbauweise auf und umfasst Schienen, auf denen die Förderkörbe über Schienenräder verfahrbar sind. Zur Befestigung der Trasse dienen mehrere Befestigungspunkte in regelmäßigen Abständen, mit denen die Trasse im Gebirgsverband der Böschung verankert ist. Durch die Trassenkonstruktion ergibt sich eine aufwendige Ausführung der Steilförderanlage mit höheren Konstruktions- und Baukosten. Für kleinere Anwendungen, die insbesondere mit geringem Aufwand eingerichtet und auch wieder abgebaut werden sollen und nicht für den großtechnischen Einsatz dienen, eignet sich die vorbekannte Steilförderanlage nur bedingt. Diese ist eher ausgelegt für einen dauerhaften Einsatz in einem sehr großen Tagebau, und eine Aufgabe der vorliegenden Erfindung besteht darin, die Ausführung, den Bau und die Installation einer Steilförderanlage zu vereinfachen. Die Steilförderanlage soll dabei insbesondere für die Überwindung von auch kleineren Förderhöhen zwischen dem unteren und dem oberen Höhenniveau geeignet sein. Insbesondere soll die Förderanlage gemäß der vorstehend beschriebenen Bauart an möglichst nur wenigen Stellen mit dem Tagebau-Abbautrichter in Verbindung gebracht werden.

Kleinere Förderanlagen sind aus der Forstwirtschaft bekannt, wie beispielsweise die US 3,011,653 A zeigt. Diese Anlage weist ein Seilsystem mit einem Tragseil und einem Zugseil auf, wobei das Zugseil mit einer Laufkatze verbunden ist, an der die Last hängend angeordnet werden kann. Zur Förderung von Rohstoffen aus einem offenen Tagebau ist die gezeigte Anlage jedoch nicht dimensioniert und auch nicht qualifizierbar, da die Be- und Entladung der Anlage nur mit Holz sinnvoll möglich ist.

Die AT 512 828 A2 zeigt eine weitere Förderanlage insbesondere für den alpinen Einsatz, wobei die Anlage zum sogenannten Holzrücken über eine Höhendistanz ausgeführt ist. Für die Förderung von Rohstoffen aus einem Tagebautrichter eines offenen Tagebaus eignet sich die gezeigte Anlage ebenfalls nicht.

Die DE 29 48 035 A1 offenbart eine Förderanlage für Rohstoffe um Halden aufzuschütten. Hierfür weist die Anlage zwei voneinander beabstandet und separat verfahrbare Raupenfahrzeuge auf, und zwischen den Raupenfahrzeugen sind ein Tragseil und ein Zugseil verspannt. Damit ist über das Tragseil ein Fördergefäß mittels der Zugseile hin und her bewegbar. Eine Förderanlage zur Förderung von Abbaumaterial von einem unteren auf ein oberes Höhenniveau in einem offenen Tagebau ermöglicht die gezeigte Anlage nicht, da eine Entladung des geförderten Materials auf dem oberen Höhenniveau nicht möglich ist. Hierzu fehlt es an einer Rohstoff-Aufnahmestation, über der das Fördergefäß führbar ist, sodass die Rohstoffe aus dem Fördergefäß in ein Abtransportmittel überführt werden könnten. Folglich besteht nicht die Möglichkeit, die gezeigte Anlage in einen Lastkraftwaren-Transportbetrieb für einen kontinuierlichen Materialfluss zu integrieren.

Aus der SU 420 546 A1 ist eine Seilbahn-Transportanlage bekannt geworden, die zwischen zwei sich gegenüberliegenden Gebirgsseiten verspannt werden kann und mit der ein Fördergefäß zwischen den beiden Gebirgsseiten in der Vertikalen verfahrbar ist. Ein Förderbetrieb von einem unteren auf ein oberes Höhenniveau eines Tagebaus ist mit einer derartigen Anlage ebenfalls nicht möglich.

Überdies offenbart die FR 529 097 A ein Kransystem mit einer verfahrbaren Greiferschaufel, wobei eine Beladestation und eine Entladestation nicht vorgesehen sind. Vielmehr handelt es sich um eine Krananlage, die insbesondere an der schrägen Böschung eines Tagebau-Abbautrichters nicht angeordnet werden kann.

### OFFENBARUNG DER ERFINDUNG

Aufgabe der Erfindung ist die Weiterbildung einer Förderanlage zur Anordnung über einer schrägen Böschung eines Tagebau-Abbautrichters, die geeignet sein soll zur Förderung von Rohstoffen von einem unteren Höhenniveau aus der Abbausohle eines Tagebautrichters auf ein oberes Höhenniveau, beispielsweise gebildet durch einen Erdboden, und die Förderanlage soll einfach ausgeführt und leicht installiert werden können. Insbesondere soll die Förderanlage so ausgebildet sein, dass diese trotz Eignung zur Förderung großer Massen eine einfache, leichte Konstruktion aufweist und nur wenige Anschlagpunkte an den Tagebautrichter auf den Höhenniveaus aufweist.

Diese Aufgabe wird ausgehend von einer Förderanlage gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Erfindungsgemäß ist zur Lösung dieser Aufgabe vorgesehen, dass wenigstens ein Tragseil zur Lastaufnahme und Führung und ein Zugseil zur Bewegung des Fördergefäßes vorgesehen sind, und wobei wenigstens auf dem oberen Höhenniveau ein Stützelement eingerichtet ist, an das das Tragseil angeschlagen ist und das Zugseil geführt ist, und dass auf dem oberen Höhenniveau eine Rohstoff-Aufnahmestation eingerichtet ist und über der das Fördergefäß führbar ist, sodass die Rohstoffe aus dem Fördergefäß in ein Rohstoff-Aufnahmemittel entladbar sind, sodass die Förderanlage zur Eingliederung in einen Lastkraftwagen-Transportbetrieb für die Rohstoffe ausgebildet ist, und wobei die Rohstoff-Aufnahmestation eine Bunkerstation und/oder eine Brecherstation oder eine LKW-Ladestation bildet, bei der das Rohstoff-Aufnahmemittel durch wenigstens einen Lastkraftwagen gebildet ist.

Kern der Erfindung ist die Weiterbildung einer Förderbandanlage für den offenen Tagebau, die ohne Trasse ausgeführt werden kann, wobei die Förderanlage zur Eingliederung in einen Lastkraftwagen-Transportbetrieb für die Rohstoffe weiterhin geeignet bleibt. Die Eingliederung in den Lastkraftwagen-Transportbetrieb ist im Sinne der vorliegenden Erfindung bereits dann erreicht, wenn die Rohstoffe wenigstens auf dem unteren Höhenniveau von einem Lastkraftwagen in das Fördergefäß der Förderanlage überführt werden können, sodass der Lastkraftwagen keine Höhendifferenzen mehr überwinden muss. Der Lastkraftwagen kann auf dem unteren Höhenniveau, also auf der Abbausohle des Tagebaus, verbleiben und der Verschleiß des Lastkraftwagens kann deutlich reduziert werden. Die Rohstoffe können Abraum, Erze, Gestein, Kohle oder sonstige Mineralien sein, wobei mit besonderem Vorteil das Fassungsvermögen des Fördergefäßes auf das Fassungsvermögen eines Lastkraftwagens abgestimmt ist. Somit kann eine Taktung hergestellt werden zwischen dem Entladen des Lastkraftwagens auf der Abbausohle des Tagebaus und der Befüllung des Fördergefäßes, wobei im Rahmen der vorliegenden Erfindung die Förderanlage mit einem Fördergefäß oder auch mit zwei Fördergefäßen ausführbar ist und wobei zwei Fördergefäße im Pendelbetrieb gegeneinander verfahren werden können.

Die einfache Ausführung der Förderanlage mit einem Seilsystem umfassend wenigstens ein Tragseil und ein Zugseil ermöglicht eine einfache, filigrane Konstruktion der Förderanlage ohne die Anordnung einer Trasse an der Böschung des Tagebautrichters, sodass die Förderanlage auch für kleinere Tagebaubetriebe, Steinbrüche oder offenen Minen qualifiziert werden kann. Viele Gewinnungsbetriebe arbeiten mit Lastkraftwagen in Stein- oder Kalkbrüchen mit Zuladungen von 15 t bis 35 t je Lastkraftwagen und haben eine Transportkapazität von 500 t/h bis 1000 t/h zu bewältigen. Die Förderanlage der vorliegenden Erfindung soll für dieses Segment qualifiziert sein, was dadurch erreicht wird, dass die Förderanlage einfach ausgeführt werden kann, jedoch mit Lastkraftwagen auf dem unteren Höhenniveau beladen werden kann.

Auf dem oberen Höhenniveau weist die Förderanlage eine Rohstoff-Aufnahmestation auf, die durch eine LKW-Ladestation gebildet ist, und die Rohstoff-Aufnahmemittel durch wenigstens einen Lastkraftwagen gebildet sind, der ohne Überwindung weiterer Höhendifferenzen auf dem oberen Höhenniveau, also auf dem Erdboden bewegt wird. Alternativ bildet die Rohstoff-Aufnahmestation eine Bunkerstation und/oder eine Brecherstation zur Zerkleinerung der Rohstoffe, in die die Rohstoffe aus dem Fördergefäß entladbar sind.

Die Rohstoff-Aufnahmestation auf dem oberen Höhenniveau kann mit besonderem Vorteil angrenzend an das Stützelement ausgebildet sein. Das Stützelement, die Antriebseinheit und/oder die Rohstoff-Aufnahmestation können auf einem gemeinsamen Fundament oder auf mehreren nebeneinander angeordneten Fundamenten aufgenommen sein, sodass im Wesentlichen nur eine obere Plattform bereitgestellt werden muss, um die Förderbandanlage auf dem oberen Höhenniveau zu installieren. Weitere Stützelemente über dem Transportweg verteilt sind folglich nicht notwendig.

Auf dem oberen Höhenniveau kann ein Masseanker vorgesehen sein, an dem das Stützelement mittels eines Abspannzugmittels abgespannt ist. Auf gleiche Weise kann auf dem unteren Höhenniveau ein Masseanker vorgesehen sein, an dem ein unteres Stützelement mittels eines Abspannzugmittels abgespannt ist. Die Masseanker können vorzugsweise massebehaftet sein und zumindest teilweise im Boden auf dem oberen Höhenniveau und auf dem unteren Höhenniveau am Rande des bzw. im Tagebautrichter eingelassen sein. Alternativ kann auch ein sonstiger Verankerungspunkt gewählt werden, der nicht zwingend auf einer großen Ruhemasse basiert, um einen Befestigungspunkt der Abspannzugmittel zu bilden. Mit besonderem Vorteil bilden die Masseanker mit den Stützelementen auf jeweils dem oberen Höhenniveau und dem unteren Höhenniveau eine Befestigungseinheit, wobei die Abspannzugmittel nicht durch ein verlängertes Tragseil gebildet sind. Das Tragseil erstreckt sich vorzugsweise zwischen dem oberen und dem unteren Stützelement. Die Zugkraft im Tragseil wird dabei jedoch im Wesentlichen durch die Abspannzugmittel aufgenommen, und die Zugkraft im Tragseil kann den Zugkräften in den Abspannzugmitteln gleichen. Dies ist insbesondere dann gegeben, wenn die Stützelemente als Pendelstützen ausgebildet sind, wofür die Stützelemente über wenigstens ein Pendelgelenk aufgenommen sind. Nach einer Weiterbildung der Förderanlage weist diese nicht zwingend auch ein Stützelement auf dem unteren Höhenniveau auf, und der Masseanker auf dem unteren Höhenniveau kann derart hinter der LKW-Aufgabestation angeordnet sein, dass das Fördergefäß positionsgenau an die LKW-Aufgabestation herangefahren werden kann.

Nach einer weiteren vorteilhaften Ausführungsform ist wenigstens eine Laufkatze vorgesehen, an der das Fördergefäß hängend angeordnet ist, wobei die Laufkatze auf dem Tragseil geführt ist und wobei das Zugseil an der Laufkatze angeschlagen ist. Auf dem oberen Höhenniveau ist vorzugsweise eine Antriebseinheit vorgesehen, in die das Zugseil einziehbar und aus der das Zugseil ausfahrbar ist, wobei die Antriebseinheit angrenzend an das Stützelement angeordnet ist. Die angrenzende Anordnung der Antriebseinheit an das Stützelement bietet den Vorteil, dass die Antriebseinheit und das Stützelement auf dem oberen Höhenniveau über ein gemeinsames Fundament aufgenommen werden können. Vorzugsweise weist das obere Stützelement eine Umlenkrolle auf, über die das Zugseil geführt wird, wodurch sich eine weitere Vereinfachung der Gesamtkonstruktion ergibt.

Auf gleiche Weise kann das Stützelement auf dem unteren Höhenniveau angrenzend an die LKW-Aufgabestation angeordnet sein. Damit ergibt sich der Vorteil, die LKW-Aufgabestation, die vorzugsweise eine Lastkraftwagenrampe aufweist, als Fundament zu nutzen, um das Stützelement aufzunehmen.

Das Fördergefäß ist vorzugsweise so konstruiert, dass in der LKW-Aufgabestation von einer oberen Gefäßseite die Rohstoffe in das Fördergefäß eingeladen werden können, und wobei das Fördergefäß in der Rohstoff-Aufnahmestation von einer unteren Gefäßseite entladbar ist. In der LKW-Aufgabestation wird das Fördergefäß unter das Niveau geführt, auf dem die Lastkraftwagen verfahren, sodass diese über einen Schüttvorgang die Fördergefäße befüllen können Hierzu dient eine Lastkraftwagenrampe als wesentlicher Bestandteil der Rohstoff-Aufnahmestation. Auf der Rohstoff-Aufnahmestation hingegen werden Fördergefäße über ein Rohstoff-Aufnahmemittel befahren, beispielsweise einen weiteren Lastkraftwagen, um die Rohstoffe ebenfalls schwerkraftbedingt aus dem Fördergefäß wieder zu entladen.

Schließlich kann die Förderanlage derart weitergebildet werden, dass zwei parallel zueinander verlaufende Tragseile vorgesehen sind, wobei auf jedem der Tragseile ein Fördergefäß mit je einer zugeordneten Laufkatze aufgenommen ist, und wobei das Zugseil beide Fördergefäße für einen Pendelbetrieb der Fördergefäße miteinander verbindet. Vorzugsweise ist für eine solche Ausführung der Förderanlage das Stützelement auf dem oberen Höhenniveau derart breit ausgeführt, dass über ein einziges Stützelement beide Tragseile geführt werden können. Beispielsweise kann weiterhin nur ein Abspannzugmittel zwischen dem oberen Stützelement und dem Masseanker vorgesehen sein, welches entsprechend für zwei Tragseile dimensioniert ist. Auch kann das Stützelement als Pendelstützte mit entsprechenden Pendelgelenken ausgeführt werden, obwohl zwei Tragseile vorgesehen sind. Die Tragseile müssen einen Abstand zueinander aufweisen, der es erlaubt, dass zwei Fördergefäße im Pendelbetrieb verfahren werden können, sodass ein Fördergefäß an der Böschung des Tagebautrichters hochgefahren wird, während ein weiteres Fördergefäß heruntergefahren wird. Dadurch wird der Vorteil erreicht, dass die Eigenmasse der Fördergefäße sowie der Laufkatzen gegeneinander aufgehoben werden, sodass die Förderanlage energieeffizient betrieben werden kann.

### AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht der Förderanlage in Anordnung an einer Böschung eines Tagebautrichters,
- Fig. 2: eine Draufsicht auf die LKW-Aufgabestation auf dem unteren Höhenniveau der Förderanlage,
- Fig. 3: eine Draufsicht auf die Rohstoff-Aufnahmestation auf dem oberen Höhenniveau der Förderanlage, und
- Fig. 4: eine Seitenansicht der Rohstoff-Aufnahmestation auf dem oberen Höhenniveau.

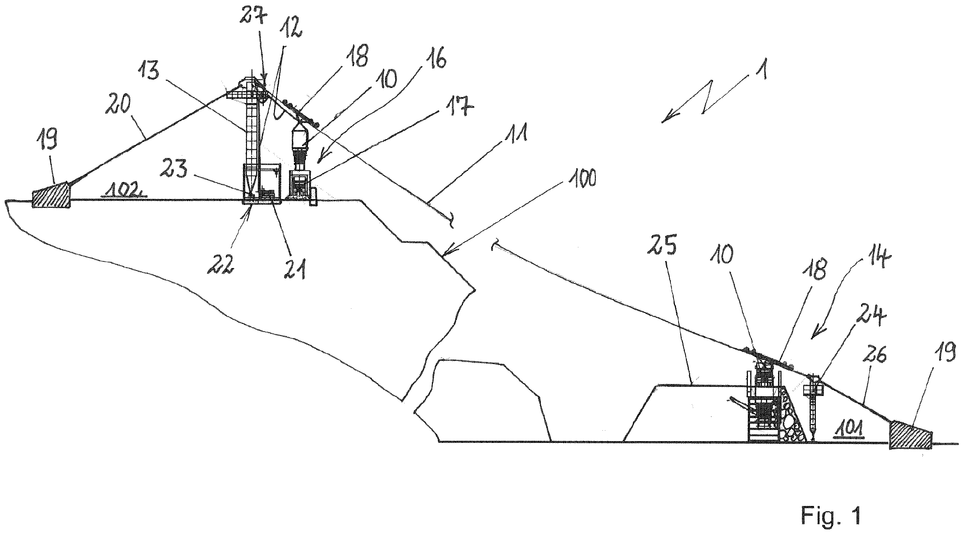

Figur 1 zeigt eine Förderanlage 1 in einer Gesamtansicht, und die Förderanlage 1 ist über einer schrägen Böschung 100 eines Tagebautrichters angeordnet. Die Förderanlage 1 erstreckt sich dabei zwischen einem unteren Höhenniveau 101 und einem oberen Höhenniveau 102 und ist auch nur auf diesen Höhenniveaus 101 und 102 mit dem Tagebautrichter verbunden. Das untere Höhenniveau 101 repräsentiert eine Abbausohle zum Abbau von Rohstoffen, beispielsweise Abraum, Erze, Kohle oder sonstige Mineralien. Die Förderanlage ist so dimensioniert, dass diese beispielsweise etwa zwischen 500 t/h bis 1000 t/h Rohstoffe fördern kann.

Die Förderanlage 1 weist ein Fördergefäß 10 auf, das zwischen einer LKW-Aufgabestation 14 auf dem unteren Höhenniveau 101 und einer Rohstoff-Aufnahmestation 16 auf dem oberen Höhenniveau 102 verfahren kann.

Zur Führung des Fördergefäßes 10 ist zwischen dem unteren Höhenniveau 101 und dem oberen Höhenniveau 102 ein Tragseil 11 gespannt, und es ist eine Laufkatze 18 vorgesehen, die auf dem Tragseil 11 verfährt. Das Fördergefäß 10 ist dabei hängend unter der Laufkatze 18 angeordnet. Das Fördergefäß 10 ist mit einem Zugseil 12 verfahrbar, das an der Laufkatze 18 angeschlagen ist. Der Fördergefäß 10 ist über einen Zugantrieb zwischen dem unteren Höhenniveau 101 und dem oberen Höhenniveau 102 verfahrbar.

Auf dem unteren Höhenniveau 101 weist die Förderanlage 1 eine LKW-Aufgabestation 14 auf, die dazu ausgebildet ist, das Fördergefäß 10 durch Lastkraftwagen mit Rohstoffen zu beladen. Hierzu weist die LKW-Aufgabestation 14 eine Lastkraftwagenrampe 25 auf, sodass das Fördergefäß 10 durch ein Schütten der Rohstoffe über eine obere Öffnung in das Fördergefäß 10 beladen werden kann.

Auf dem oberen Höhenniveau 102 weist die Förderanlage 1 eine Rohstoff-Aufnahmestation 16 auf, in der das Fördergefäß 10 über ein Rohstoff-Aufnahmemittel 17 fahrbar ist, und bei einem Öffnen des Fördergefäßes 10 über eine untere Öffnungsseite können die Rohstoffe in ein Rohstoff-Aufnahmemittel 17 entladen werden.

Die Förderanlage 1 weist beispielhaft zwei Stützelemente 13 und 24 auf, und ein erstes Stützelement 13 ist auf dem oberen Höhenniveau 102 eingerichtet und ein zweites Stützelement 24 ist auf dem unteren Höhenniveau 101 eingerichtet. Das Tragseil 11 ist zwischen den beiden Stützelementen 13 angeschlagen und verspannt. Auf der dem Tragseil 11 abgewandten Seite sind die Stützelemente 13 und 24 mit Abspannzugmitteln 20 und 26 an Masseankern 19 abgespannt, und ein erster Masseanker 19 ist auf dem oberen Höhenniveau 102 angeordnet, sodass sich das Abspannzugmittel 20 zwischen dem oberen Masseanker 19 und dem Stützelement 13 erstreckt. Auf dem unteren Höhenniveau 101 ist der weitere Masseanker 19 auf der dem Tragseil 11 abgewandten Seite hinter dem Stützelement 24 angeordnet, und das Abspannzugmittel 26 erstreckt sich zwischen dem Masseanker 19 und dem Stützelement 24. Die Masseanker 19 bilden Anschlagpunkte zum Abspannen der Stützelemente 13 und 24, und die Masseanker 19 können auch durch nicht massebasierte Anschlagpunkte im Boden ausgebildet sein.

Das Fördergefäß 10 wird zur Bewegung über das Zugseil 12 mit einer Antriebseinheit 21 angetrieben, und die Antriebseinheit 21 ist angrenzend an das obere Stützelement 13 angeordnet. Das Zugseil 12 kann zum Hochfahren des Fördergefäßes 10 in die Antriebseinheit 21 eingezogen und zum Herunterfahren des Fördergefäßes 10 aus dieser ausgefahren werden, und es befindet sich im oberen Bereich des Stützelementes 13 eine Umlenkrolle 27, um die das Zugseil 12 geführt ist. Dadurch entsteht eine besonders einfache Einrichtung der Antriebseinheit 21 und eine einfache Führung des Zugseiles 12. Insbesondere kann die Antriebseinheit 21 gemeinsam mit dem Stützelement 13 auf einem ein- oder mehrteiligen Fundament 22 aufliegen, das auf dem oberen Höhenniveau 102 eingelassen ist.

Die Förderanlage 1 ist beispielhaft mit zwei Stützelementen 13 und 24 gezeigt, wobei das Stützelement 13 zur Abspannung des Tragseils 11 auf dem oberen Höhenniveau 102 notwendig ist, hingegen kann das Stützelement 24 auf dem unteren Höhenniveau 101 auch entfallen und das Tragseil 11 wird unmittelbar am unteren Masseanker 19 auf dem unteren Höhenniveau 101 abgespannt, beispielsweise unmittelbar hinter der LKW-Aufgabestation 14.

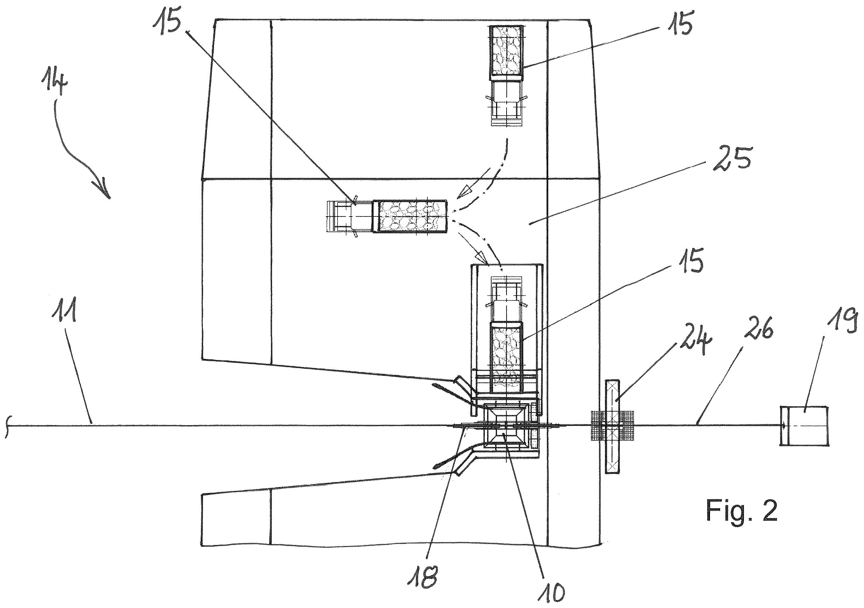

Figur 2 zeigt eine Draufsicht auf die LKW-Aufgabestation 14 auf dem unteren Höhenniveau 101. Die LKW-Aufgabestation 14 weist als wesentlichen Bestandteil eine Lastkraftwagenrampe 25 auf, die mit Lastkraftwagen 15 befahrbar ist. Beispielhaft sind mehrere Lastkraftwagen 15 gezeigt, die mit Rohstoffen beladen sind. Das Tragseil 11 verläuft über der Lastkraftwagenrampe 25 und ist mit dem Stützelement 24 abgestützt und über das Abspannzugmittel 26 und den Masseanker 19 abgespannt. Auf dem Tragseil 11 ist die Laufkatze 18 verfahrbar, und unter der Laufkatze 18 ist das Fördergefäß 10 hängend angeordnet. Das Fördergefäß 10 befindet sich auf einer Höhe unterhalb der Oberfläche der Lastkraftwagenrampe 25, sodass die Rohstoffe von den Lastkraftwagen 15 über eine obere Einfüllöffnung schüttend in das Fördergefäß 10 eingefüllt werden können.

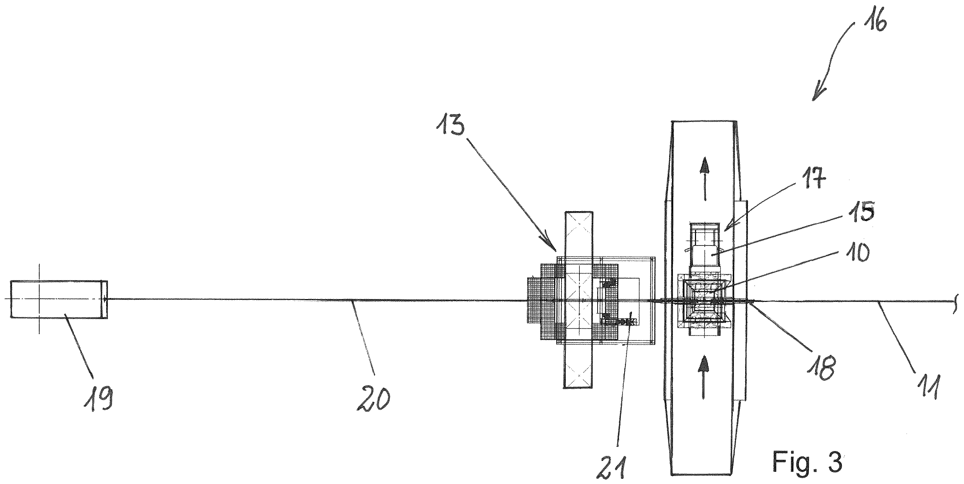

Figur 3 zeigt eine Draufsicht auf die Rohstoff-Aufnahmestation 16 auf dem oberen Höhenniveau 102. Das Tragseil 11 ist am Stützelement 13 angeschlagen und mit dem Abspannzugmittel 20 gegen den Masseanker 19 abgespannt. Unmittelbar am Stützelement 13 ist die Antriebseinheit 21 angeordnet, die zum Antrieb der Bewegung des Fördergefäßes entlang des Tragseils 11 dient. Das Fördergefäß 10 ist hängend an der Laufkatze 18 aufgenommen, und die Laufkatze 18 ist über dem Tragseil 11 verfahrbar.

Die Rohstoff-Aufnahmestation 16 dient zur Entladung der Rohstoffe aus dem Fördergefäß 10 in ein Rohstoff-Aufnahmemittel 17, das beispielhaft durch einen Lastkraftwagen 15 gezeigt ist. Dieser kann, wie die Pfeile zeigen, unter das Fördergefäß 10 fahren, sodass die Rohstoffe über eine untere Öffnung aus dem Fördergefäß 10 schüttend in den Lastkraftwagen 15 überführt werden können.

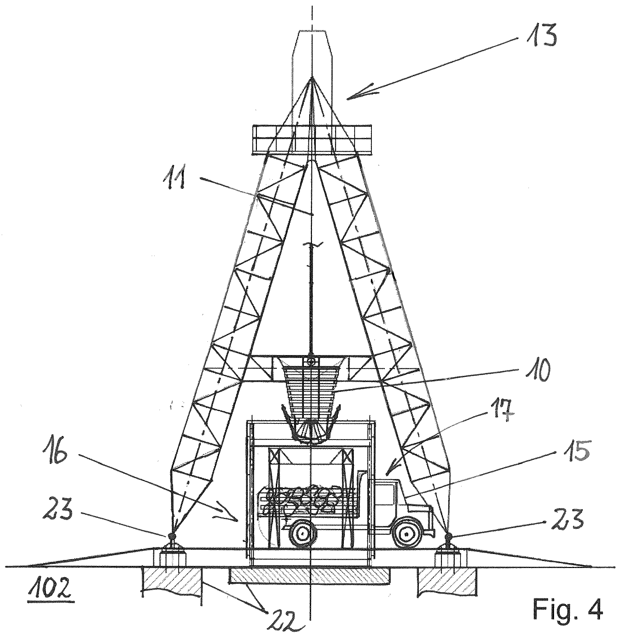

Figur 4 zeigt eine Seitenansicht der Rohstoff-Aufnahmestation 16 mit einem Rohstoff-Aufnahmemittel 17 in Form eines Lastkraftwagens 15. Die Ansicht zeigt die Anordnung des Fördergefäßes 10 über dem Lastkraftwagen 15, und das Fördergefäß 10 ist hängend am Tragseil 11 angeordnet.

Die Seitenansicht des Stützelementes 13 zeigt die Aufnahme des Stützelementes 13 in Form eines Pfeilers, der über Pendelgelenke 23 beweglich an einem Fundament 22 aufgenommen ist. Die Pendelgelenke gestatten eine Bewegung des Stützelementes 13 um die Pendelgelenke 23, wobei durch die Abspannung des Tragseils 11 mit einer Zugkraft in einer ersten Richtung und die Abspannung über das Abspannzugmittel gegen den Masseanker in einer zweiten Richtung eine Stabilität in das Stützelement 13 eingebracht wird. Die pendelnde Anordnung des Stützelementes 13 über die Pendelgelenke 23 auf dem Fundament 22 ermöglicht jedoch eine einfache Konstruktion, da in das Stützelement 13 keine Querkräfte eingebracht werden und dieser daher besonders einfach ausgeführt sein kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

## Patentansprüche

1. Förderanlage (1) für den offenen Tagebau, ausgebildet zur Anordnung über einer schrägen Böschung (100) eines Tagebautrichters, mit der Rohrstoffe von einem unteren Höhenniveau (101) auf einer Abbausohle des Tagebaus auf ein oberes Höhenniveau (102) auf einem Erdboden angrenzend an den Tagebautrichter förderbar sind, wobei wenigstens ein Fördergefäß (10) vorgesehen ist, das mit Rohrstoffen auf dem unteren Höhenniveau (101) beladbar ist und aus dem die Rohstoffe auf dem oberen Höhenniveau (102) entladbar sind, und wobei auf dem unteren Höhenniveau (101) eine LKW- Aufgabestation (14) eingerichtet ist und an die das Fördergefäß (10) führbar ist, sodass die Rohstoffe von einem auf die LKW-Aufgabestation (14) fahrbaren Lastkraftwagen (15) über einen Schüttvorgang in das Fördergefäß (10) einfüllbar sind, und wobei auf dem oberen Höhenniveau (102) eine Rohstoff- Aufnahmestation (16) eingerichtet ist und über der das Fördergefäß (10) führbar ist, sodass die Rohstoffe aus dem Fördergefäß (10) in ein Rohstoff-Aufnahmemittel (17) entladbar sind,
sodass die Förderanlage (1) zur Eingliederung in einen Lastkraftwagen-Transportbetrieb für die Rohstoffe ausgebildet ist, **dadurch gekennzeichnet, dass**
- wenigstens ein Tragseil (11) zur Lastaufnahme und Führung und ein Zugseil (12) zur Bewegung des Fördergefäßes (10) vorgesehen sind, und wobei wenigstens auf dem oberen Höhenniveau (102) ein Stützelement (13) eingerichtet ist, an das das Tragseil (11) angeschlagen ist und das Zugseil (12) geführt ist, und dass
- die Rohstoff- Aufnahmestation (16) eine Bunkerstation und/oder eine Brecherstation bildet, in die die Rohstoffe aus dem Fördergefäß (10) entladbar sind oder die Rohstoff-Aufnahmestation (16) eine LKW- Ladestation bildet, bei der das Rohstoff-Aufnahmemittel (17) durch wenigstens einen Lastkraftwagen (15) gebildet ist.

2. Förderanlage (1) nach Anspruch 1, **dadurch gekennzeichnet, dass** die Rohstoff-Aufnahmestation (16) auf dem oberen Höhenniveau (102) angrenzend an das Stützelement (13) ausgebildet ist.

3. Förderanlage (1) nach Anspruch 1 oder 2, **dadurch gekennzeichnet, dass** wenigstens eine Laufkatze (18) vorgesehen ist, an der das Fördergefäß (10) hängend angeordnet ist, wobei die Laufkatze (18) auf dem Tragseil (11) geführt ist und wobei das Zugseil (12) an der Laufkatze (18) angeschlagen ist.

4. Förderanlage (1) nach einem der vorgenannten Ansprüche, **dadurch gekennzeichnet, dass** auf dem oberen Höhenniveau (102) ein Masseanker (19) vorgesehen ist, an dem das Stützelement (13) mittels eines Abspannzugmittels (20) abgespannt ist und/oder dass auf dem unteren Höhenniveau (101) ein Masseanker (19) vorgesehen ist, an dem ein unteres Stützelement (24) mittels eines Abspannzugmittels (26) abgespannt ist.

5. Förderanlage (1) nach einem der vorgenannten Ansprüche, **dadurch gekennzeichnet, dass** auf dem oberen Höhenniveau (102) eine Antriebseinheit (21) vorgesehen ist, in die das Zugseil (12) einziehbar und aus der das Zugseil (12) ausfahrbar ist, wobei die Antriebseinheit (21) angrenzend an das Stützelement (13) angeordnet ist.

6. Förderanlage (1) nach Anspruch 5, **dadurch gekennzeichnet, dass** auf dem oberen Höhenniveau (102) Fundamente (22) angeordnet sind, auf denen das Stützelement (13) und/oder die Antriebseinheit (21) und/oder die Rohstoff- Aufnahmestation (16) aufgenommen sind.

7. Förderanlage (1) nach einem der vorgenannten Ansprüche, **dadurch gekennzeichnet, dass** wenigstens eines der Stützelemente (13, 24) als Pendelstütze ausgebildet ist, wofür das Stützelement (13, 24) über wenigstens ein Pendelgelenk (23) aufgenommen ist.

8. Förderanlage (1) nach einem der vorgenannten Ansprüche, **dadurch gekennzeichnet, dass** das Stützelement (24) auf dem unteren Höhenniveau (102) angrenzend an die LKW-Aufgabestation (14) angeordnet ist.

9. Förderanlage (1) nach einem der vorgenannten Ansprüche, **dadurch gekennzeichnet, dass** die LKW-Aufgabestation (14) eine Lastkraftwagenrampe (25) aufweist, sodass ein Lastkraftwagen (15) in der LKW-Aufgabestation (14) auf eine Höhe oberhalb des Fördergefäßes (10) fahrbar ist.

10. Förderanlage (1) nach einem der vorgenannten Ansprüche, **dadurch gekennzeichnet, dass** das Fördergefäß (10) in der LKW-Aufgabestation (14) von einer oberen Gefäßseite beladbar ist und wobei das Fördergefäß (10) in der Rohstoff- Aufnahmestation (16) von einer unteren Gefäßseite entladbar ist.

11. Förderanlage (1) nach einem der vorgenannten Ansprüche, **dadurch gekennzeichnet, dass** zwei parallel zueinander verlaufende Tragseile (11) vorgesehen sind, wobei auf jedem der Tragseile (11) ein Fördergefäß (10) mit je einer zugeordneten Laufkatze (18) aufgenommen ist, und wobei das Zugseil (12) beide Fördergefäße (10) für einen Pendelbetrieb der Fördergefäße (10) miteinander verbindet.

## Claims

1. Conveying installation (1) for open-cast mining, designed for arrangement over an oblique slope (100) of an open-cast mine pit, by means of which conveying installation raw materials can be conveyed from a lower height level (101) on an extraction level of the open-cast mine to an upper height level (102) at ground level adjacent to the open-cast mine pit, wherein at least one conveying container (10) is provided which can be loaded with raw materials at the lower height level (101) and from which the raw materials can be unloaded at the upper height level (102), and wherein, at the lower height level (101), a truck offloading station (14) is set up, to which the conveying container (10) can be guided such that the raw materials can be introduced from a truck (15), which can be driven to the truck offloading station (14), into the conveying container (10) by means of a pouring process, and wherein, at the upper height level (102), a raw material receiving station (16) is set up, over which the conveying container (10) can be guided such that the raw materials can be unloaded from the conveying container (10) into a raw material receiving means (17), such that the conveying installation (1) is designed for incorporation into a truck transport operation for the raw materials,
**characterized in that**
- at least one bearing cable (11) for load-bearing and control and one traction cable (12) for moving the conveying container (10) are provided, and wherein, at least at the upper height level (102), a support element (13) is set up, to which the bearing cable (11) is attached and on which the traction cable (12) is guided, and **in that**
- the raw material receiving station (16) forms a bunker station and/or a crusher station, into which the raw materials can be unloaded from the conveying container (10), or the raw material receiving station (16) forms a truck loading station, in the case of which the raw material receiving means (17) is formed by at least one truck (15).

2. Conveying installation (1) according to Claim 1, **characterized in that** the raw material receiving station (16) is formed at the upper height level (102) adjacent to the support element (13).

3. Conveying installation (1) according to Claim 1 or 2, **characterized in that** at least one travelling carriage (18) is provided on which the conveying container (10) is arranged in suspended fashion, wherein the travelling carriage (18) is guided on the bearing cable (11), and wherein the traction cable (12) is attached to the travelling carriage (18) .

4. Conveying installation (1) according to one of the preceding claims, **characterized in that**, at the upper height level (102), there is provided a mass-based anchor (19) to which the support element (13) is braced by a bracing tension means (20), and/or in that, at the lower height level (101), there is provided a mass-based anchor (19) to which a lower support element (24) is braced by a bracing tension means (26).

5. Conveying installation (1) according to one of the preceding claims, **characterized in that**, at the upper height level (102), there is provided a drive unit (21) into which the traction cable (12) can be pulled and out of which the traction cable (12) can be deployed, wherein the drive unit (21) is arranged adjacent to the support element (13).

6. Conveying installation (1) according to Claim 5, **characterized in that**, at the upper height level (102), there are arranged foundations (22) on which the support element (13) and/or the drive unit (21) and/or the raw material receiving station (16) are accommodated.

7. Conveying installation (1) according to one of the preceding claims, **characterized in that** at least one of the support elements (13, 24) is in the form of a hinged support, for which purpose the support element (13, 24) is held by means of at least one hinged joint (23).

8. Conveying installation (1) according to one of the preceding claims, **characterized in that** the support element (24) is arranged at the lower height level (102) adjacent to the truck offloading station (14) .

9. Conveying installation (1) according to one of the preceding claims, **characterized in that** the truck offloading station (14) comprises a truck ramp (25), such that a truck (15) can, in the truck offloading station (14), be driven to a height above the conveying container (10).

10. Conveying installation (1) according to one of the preceding claims, **characterized in that** the conveying container (10) can be loaded from an upper container side in the truck offloading station (14), and wherein the conveying container (10) can be unloaded from a lower container side in the raw material receiving station (16).

11. Conveying installation (1) according to one of the preceding claims, **characterized in that** two bearing cables (11) which run parallel to one another are provided, wherein a conveying container (10) is received by means of a respectively associated travelling carriage (18) on each of the bearing cables (11), and wherein the traction cable (12) connects the two conveying containers (10) to one another for shuttle operation of the conveying containers (10).

## Revendications

1. Installation d'extraction (1) pour l'extraction à ciel ouvert, réalisée pour être disposée au-dessus d'un talus incliné (100) d'un cratère d'extraction à ciel ouvert, qui permet d'extraire des matières premières d'un niveau de hauteur inférieur (101) sur un étage d'exploitation de l'extraction à ciel ouvert vers un niveau de hauteur supérieur (102) en surface de manière adjacente au cratère d'extraction à ciel ouvert, au moins une benne d'extraction (10) étant prévue qui peut être chargée de matières premières sur le niveau de hauteur inférieur (101) et d'où les matières premières peuvent être déchargées sur le niveau de hauteur supérieur (102), et dans laquelle, sur le niveau de hauteur inférieur (101), une station de chargement de camion (14) est aménagée et la benne d'extraction (10) peut y être amenée de sorte que les matières premières peuvent être versées dans la benne d'extraction (10) par une opération de déversement par un camion (15) pouvant s'approcher de la station de chargement de camion (14), et dans laquelle, sur le niveau de hauteur supérieur (102), une station de réception de matières premières (16) est aménagée et au-dessus de laquelle la benne d'extraction (10) peut être amenée de sorte que les matières premières peuvent être déchargées de la benne d'extraction (10) dans un moyen de réception de matières premières (17) de sorte que l'installation d'extraction (1) est réalisée pour s'intégrer dans un fonctionnement de transport par camion pour les matières premières,
**caractérisée en ce que**
- au moins un câble porteur (11) pour le levage et le guidage et un câble de traction (12) pour le déplacement de la benne d'extraction (10) sont prévus, et dans laquelle, au moins sur le niveau de hauteur supérieur (102), un élément de support (13) est aménagé auquel le câble porteur (11) est élingué et le câble de traction (12) est guidé, et **en ce que**
- la station de réception de matières premières (16) forme une station d'accumulation et/ou une station de concassage dans lesquelles les matières premières peuvent être déchargées de la benne d'extraction (10), ou la station de réception de matières premières (16) forme une station de chargement de camion où le moyen de réception de matières premières (17) est formé par au moins un camion (15).

2. Installation d'extraction (1) selon la revendication 1, **caractérisée en ce que** la station de réception de matières premières (16) est réalisée sur le niveau de hauteur supérieur (102) de manière adjacente à l'élément de support (13).

3. Installation d'extraction (1) selon la revendication 1 ou 2, **caractérisée en ce qu'**au moins un chariot de pont roulant (18) est prévu sur lequel la benne d'extraction (10) est disposée en suspension, le chariot de pont roulant (18) étant guidé sur le câble porteur (11), et le câble de traction (12) étant élingué au chariot de pont roulant (18).

4. Installation d'extraction (1) selon l'une quelconque des revendications précédentes, **caractérisée en ce que** sur le niveau de hauteur supérieur (102), un ancrage de masse (19) est prévu auquel l'élément de support (13) est haubané à l'aide d'un moyen de traction de haubanage (20), et/ou **en ce que** sur le niveau de hauteur inférieur (101), un ancrage de masse (19) est prévu auquel un élément de support inférieur (24) est haubané à l'aide d'un moyen de traction de haubanage (26).

5. Installation d'extraction (1) selon l'une quelconque des revendications précédentes, **caractérisée en ce que** sur le niveau de hauteur supérieur (102), une unité d'entraînement (21) est prévue dans laquelle le câble de traction (12) peut être rentré et de laquelle le câble de traction (12) peut être sorti, l'unité d'entraînement (21) étant disposée de manière adjacente à l'élément de support (13).

6. Installation d'extraction (1) selon la revendication 5, **caractérisée en ce que** sur le niveau de hauteur supérieur (102), des fondations (22) sont disposées sur lesquelles l'élément de support (13) et/ou l'unité d'entraînement (21) et/ou la station de réception de matières premières (16) sont reçus.

7. Installation d'extraction (1) selon l'une quelconque des revendications précédentes, **caractérisée en ce qu'**au moins l'un des éléments de support (13, 24) est réalisé sous forme de support oscillant, l'élément de support (13, 24) étant à cet effet reçu par l'intermédiaire d'au moins une articulation à pendule (23) .

8. Installation d'extraction (1) selon l'une quelconque des revendications précédentes, **caractérisée en ce que** l'élément de support (24) est disposé sur le niveau de hauteur inférieur (102) de manière adjacente à la station de chargement de camion (14).

9. Installation d'extraction (1) selon l'une quelconque des revendications précédentes, **caractérisée en ce que** la station de chargement de camion (14) présente une rampe pour camion (25) de sorte qu'un camion (15) peut être déplacé dans la station de chargement de camion (14) jusqu'à une hauteur au-dessus de la benne d'extraction (10).

10. Installation d'extraction (1) selon l'une quelconque des revendications précédentes, **caractérisée en ce que** la benne d'extraction (10) dans la station de chargement de camion (14) peut être chargée à partir d'un côté de benne supérieur, la benne d'extraction (10) dans la station de réception de matières premières (16) pouvant être déchargée à partir d'un côté de benne inférieur.

11. Installation d'extraction (1) selon l'une quelconque des revendications précédentes, **caractérisée en ce que** deux câbles porteurs (11) s'étendant en parallèle l'un à l'autre sont prévus, une benne d'extraction (10) avec respectivement un chariot de pont roulant (18) associé étant reçue sur chacun des câbles porteurs (11), et le câble de traction (12) reliant l'une à l'autre les deux bennes d'extraction (10) pour un fonctionnement pendulaire des bennes d'extraction (10).
